# EUROPEAN PATENT SPECIFICATION

(11) **EP 2 234 316 B1**
(45) Date of publication and mention of the grant of the patent: **29.05.2013**
(21) Application number: 10003062.6
(22) Date of filing: 23.03.2010
(51) Int. Cl.: H04L 5/00

(54) **Method and apparatus for power headroom reporting**
Verfahren und Vorrichtung zur Energiereserve-Berichterstattung
Procédé et appareil pour rapport de marge d'alimentation

(30) Priority: 23.03.2009 US 162337 P
(43) Date of publication of application: 29.09.2010
(73) Proprietor: Innovative Sonic Limited, Port Louis (MU)
(72) Inventor: Guo, Yu-Hsuan, Taipei City (TW); Lin, Ko-Chiang, Taipei City (TW)
(74) Representative: Görz, Ingo

(56) References cited:
- WO-A2-2010/065759
- NOKIA SIEMENS NETWORKS ET AL: "PUSCH Power Control for LTE-Advanced" 3GPP DRAFT; R1-090738_UL_PC_LTEA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050318602 [retrieved on 2009-02-03]
- "LTE; Evolved Universal Terrestrial Radio Access (E-UTRA); Physical layer procedures (3GPP TS 36.213 version 8.4.0 Release 8))" ETSI TS 136 213 V8.4.0,, vol. 136 213, no. v8.4.0, 1 November 2008 (2008-11-01), pages 1-61, XP002588197

## Description

The present invention relates to a method and apparatus for performing Power Headroom Reporting in a user equipment (UE) of a wireless communication system according to the pre-characterizing clauses of claims 1 and 2.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, a MAC Protocol Data Unit (PDU) consists of a MAC header, zero or more MAC Service Data Units (SDUs), zero or more MAC control elements, and optionally padding. A MAC PDU header consists of one or more MAC PDU sub-headers, each corresponding to either a MAC SDU, a MAC control element or padding. The MAC PDU sub-headers have the same order as the corresponding MAC SDUs, MAC control elements and padding.

According to the current specifications(3GPP TS 36.321, 36.213, 36.133), MAC control elements transmitted by a UE include a buffer status report (BSR) MAC control element and a power headroom report (PHR) MAC control element. The BSR MAC control element is generated by a Buffer Status reporting procedure, and is used to provide the serving base station, or called enhanced Node B (eNB), with information about the amount of data in the uplink (UL) buffers of a UE for scheduling of uplink transmission. The PHR MAC control element is generated by a Power Headroom reporting procedure, and is used to provide the serving eNB with information about the difference between the maximum UE transmission (TX) power and an estimated TX power for Uplink Share Channel (UL-SCH). With the BSR and PHR information sent by the UE, the network can allocate radio resource to the UE and make schedule decision more efficiently.

In general, a PHR is triggered if any of the following events occurs: (1) a timer *"prohibitPHR-TIMER"* for prohibiting power headroom reporting expires or has expired and a path loss of the UE has changed more than a predetermined value *"DL_PathlossChange"* since the last power headroom report; and (2) a periodic timer *"PeriodicPHR-Timer"* expires, in which case the PHR is referred below to as *"Periodic PHR".* After the PHR is triggered, if the UE has UL resources allocated for a new transmission for this TTI, the UE obtains the value of the power headroom from the physical layer to generate a PHR MAC control element, and restarts the timer *"prohibitPHR-TIMER".* Besides, if the triggered PHR is a *"Periodic PHR",* the UE restarts the periodic timer *"PeriodicPHR-Timer".* Detailed operations of the PHR procedure can be referred to in related specifications (3GPP TS 36.321, 36.213, 36.133) and are not narrated herein.

On the other hand, the 3rd Generation Partnership Project (3GPP) has started to work out a next generation of the LTE system: the LTE Advanced (LTE-A) system, to meet future requirements of all kinds of communication services. Carrier Aggregation (CA) is introduced in the LTE-A system, which enables the UE to aggregate multiple carries for transmission, such that the transmission bandwidth and spectrum efficiency can be enhanced.

At present, the characteristics of carrier aggregation are quoted as below:
(1) Supporting carrier aggregation for both contiguous and non-contiguous component carriers.
(2) The aggregated number of component carriers in the uplink (UL) and the downlink (DL) can be different. For backward-compatible configuration, the aggregated numbers of component carriers in the UL and the DL should be the same.
(3) It is possible to configure a UE to aggregate a different number of component carriers in the UL and the DL to obtain different bandwidths.
(4) From a UE perspective, there is one transport block and one hybrid-ARQ (HARQ) entity per scheduled component carrier. Each transport block is mapped to a single component carrier only.

However, after the carrier aggregation is introduced, how to report the PH value for different carriers and how to trigger the power headroom reporting are not specified. When multiple carriers are configured for transmission(due to the support of CA), if only one PH value is reported by the UE, the eNB cannot know the power status of each uplink carrier of the UE and thus is hard to schedule radio resources to the UE efficiently. Therefore, there is a need to have the PHR procedure under carrier aggregation be specified.

This in mind, the present invention aims at providing a method and apparatus for performing Power Headroom Reporting in a user equipment (UE) of a wireless communication system, to support carrier aggregation.

This is achieved by a method and apparatus for performing Power Headroom Reporting (PHR) in a user equipment (UE) of a wireless communication system according to the pre-characterizing clauses of claims 1 and 2. The dependent claims pertain to corresponding further developments and improvements.

As will be seen more clearly from the detailed description following below, the present invention discloses a method for performing Power Headroom Reporting (PHR) in a user equipment (UE) of a wireless communication system. The wireless communication system supports Carrier Aggregation (CA), such that the UE is able to perform transmission through multiple carriers. The method includes steps of configuring a plurality of uplink carriers; and generating at least one PH values, each corresponding to one of the plurality of uplink carriers.

In the following, the invention is further illustrated by way of example, taking reference to the accompanying drawings. Thereof
FIG.1 is a schematic diagram of a wireless communication system.
FIG.2 is a functional block diagram of a wireless communication device.
FIG.3 is a schematic diagram of the program shown in FIG.2.
FIG.4 is a flow chart of a process according to an embodiment of the present invention.
FIG.5 is a flowchart of a process according to another embodiment of the present invention.

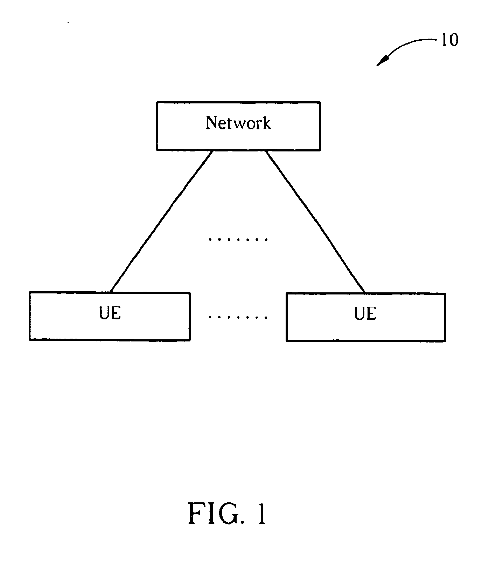

Please refer to FIG.1, which illustrates a schematic diagram of a wireless communications system 10. The wireless communications system 10 is preferred to be an LTE advanced (LTE-A) system, and is briefly composed of a network and a plurality of user equipments (UEs). In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

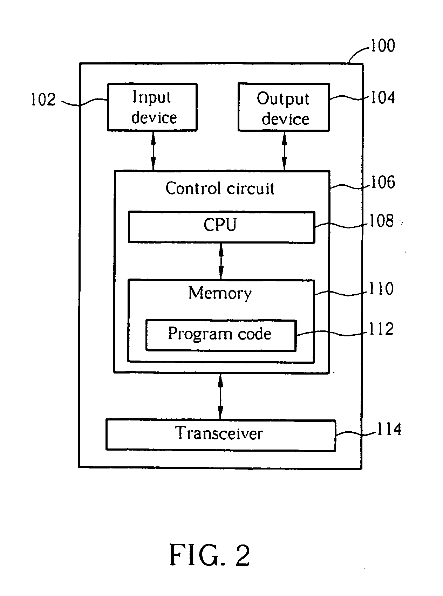

Please refer to FIG.2, which is a functional block diagram of a communications device 100 in a wireless communications system. The communications device 100 can be utilized for realizing the UEs in FIG.1, and the wireless communications system is preferably the LTE system. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

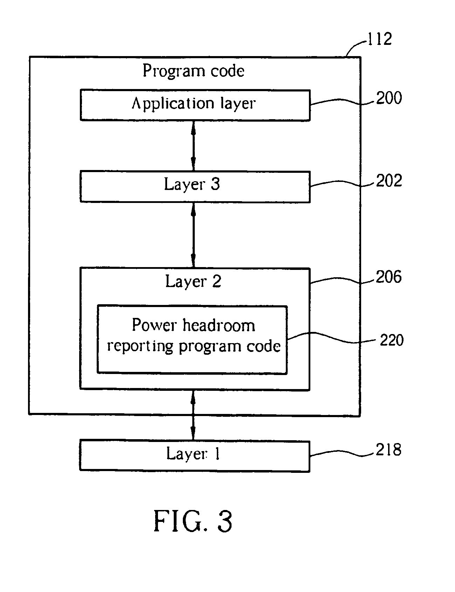

Please continue to refer to FIG3. FIG.3 is a diagram of the program code 112 shown in FIG.2. The program code 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In LTE-A system, the program code 112 supports Carrier Aggregation (CA), such that the UE is able to perform transmission through multiple carriers. Besides, the MAC layer of the Layer 2 206 performs a Power Headroom Reporting (PHR) procedure, to report power usage status of the UE to the serving base station, such that the network can allocate transmission resources and make scheduling decision efficiently. In such a situation, the embodiment of the present invention provides power headroom reporting program code 220 for performing power headroom reporting under the carrier aggregation, so as to enhance the performance of system resource scheduling.

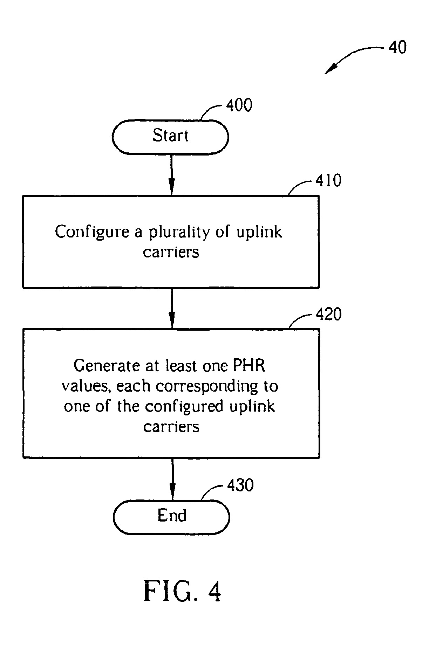

Please refer to FIG.4, which illustrates a schematic diagram of a process 40. The process 40 is utilized for performing power headroom reporting in a UE of the wireless communications system 10, and can be compiled into the power headroom reporting program code 220. The process 40 includes the following steps:
Step 400: Start.
Step 410: Configure a plurality of uplink carriers.
Step 420: Generate at least one PH values, each corresponding to one of the configured uplink carriers.
Step 430: End.

According to the process 40, when the carrier aggregation functionality is activated, the UE generates PH values, each corresponding to one of the configured uplink carriers, such that the network can be aware of the power usage status of each configured uplink carrier of the UE. As a result, the network can allocate transmission resources and make scheduling decision efficiently.

As mentioned, a MAC Protocol Data Unit (PDU) consists of a MAC header, zero or more MAC Service Data Units (SDUs), zero or more MAC control elements, and optionally padding. A MAC PDU header consists of one or more MAC PDU sub-headers, each corresponding to either a MAC SDU, a MAC control element or padding. The MAC PDU sub-headers have the same order as the corresponding MAC SDUs, MAC control elements and padding.

In the embodiment of the present invention, the PH values of the configured uplink carriers can be together transmitted in a pre-defined uplink carrier, or can be individually transmitted in its corresponding uplink carrier. For the case that the PH values are all transmitted in the pre-defined uplink carrier, the UE may generate a plurality of PHR Control Elements carried by a same MAC PDU according to the PHR values of each configured uplink carrier. Each PHR Control Element may have an identification field, for identifying which uplink carrier the carried PH value is corresponding to. The identification field can be included either in the PHR Control Element, or in a MAC sub-header corresponding to the PHR Control Element.

Certainly, in other embodiments, the PHR values of the configured uplink carriers can be all carried by one PHR Control Element through encoding. In this case, the PHR Control Element may need an indication field for indicating the number of carried PH values. -In addition, the PHR Control Element may have an identification field, for identifying which uplink carrier the carried value is corresponding to. Similarly, the identification field can be included either in the PHR Control Element, or in a MAC sub-header corresponding to the PHR Control Element.

On the other hand, for the case that the PH values of the configured uplink carriers are individually transmitted by its corresponding uplink carrier, the UE may generate a plurality of PHR Control Elements each carried by different MAC PDUs according to the PH values of the configured uplink carriers. Similarly, each of the PHR Control Elements may have an identification field, for identifying which uplink carrier the carried PH value is corresponding to.

Please note that the number of PH values generated by the UE is generally equal to the number of configured uplink carriers. However, in some cases, such as PHR functionality of some uplink carriers is not activated, the number of PH values would be less than the number of configured uplink carriers, but equal to the number of uplink carriers with activated PHR functionality in the configured uplink carriers

From the above, for supporting the carrier aggregation, the UE generates the PH values, each corresponding to one of the configured uplink carriers, such that the network can be aware of the power usage status of each configured uplink carrier of the UE. As a result, the network can allocate transmission resources and make scheduling decision efficiently.

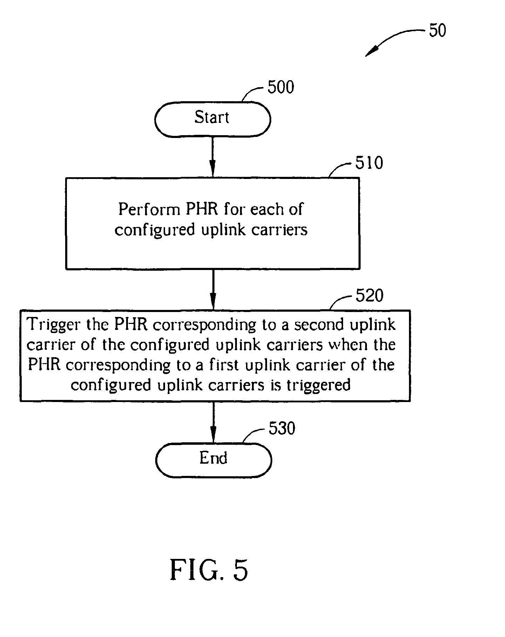

Please refer to FIG.5, which illustrates a schematic diagram of a process 50. The process 50 is utilized for triggering power headroom reporting in a UE of the wireless communications system 10, and can be compiled into the power headroom reporting program code 220. The process 50 includes the following steps:
Step 500: Start.
Step 510: Perform PHR for each of configured uplink carriers.
Step 520: Trigger the PHR corresponding to a second uplink carrier of the configured uplink carriers when the PHR corresponding to a first uplink carrier of the configured uplink carriers is triggered.
Step 530: End.

According to the process 50, when the carrier aggregation is activated, the UE performs PHR for each of the configured uplink carriers, respectively. In such a situation, when the PHR corresponding to a first uplink carrier of the configured uplink carriers is triggered, the UE -triggers the PHR corresponding to a second uplink carrier of the configured uplink carriers. That is to say, in the embodiment of the present invention, the PHR triggering of each uplink carrier is linked to each other.

For example, if the PHR corresponding to the first uplink carrier is triggered due to a path loss change of the first uplink carrier, since the path loss of the second, carrier may also change, the UE shalt Geigger the PHR of the second up link carrier, or other configured up link carriers, for enabling the network to be aware of the power usage status of each uplink carrier of the UE, such that the network is able to allocate radio resources to the UE.

Certainly, the PHR corresponding to the first uplink carrier can also be triggered due to a periodic timer, which also belongs to the scope of the present invention, as long as the PHR triggering of each uplink carrier is linked to each other.

As mentioned in the prior art section, the UE of the LTE system utilizes a periodic timer *"periodicPHR-Timer"* and a timer *"prohibitPHR-TIMER"* for prohibiting power headroom reporting to control the PHR triggering. However, for the LTE-A system that supports the carrier aggregation, since the PHR shall be performed for each configured uplink carrier, if only one set of the above timers is configured in the UE, it is not sufficient to control the PHR triggering for all of the configured uplink carriers.

Therefore, in the embodiment of the present invention, the UE may have multiple sets of timers, each corresponding to one of the configured uplink carriers, for controlling the PHR triggering of the configured uplink carriers. The said timers may include a periodic timer *"periodicPHR-Timer"* and a timer *"prohibitPHR-TIMER"* for prohibiting power headroom reporting, but are not restricted herein. In addition, the number of each kind of timer is preferably equal to the number of configured uplink timers.

On the other hand, when the PHR of some configured uplink carrier is transmitted, the embodiment of the present invention keeps all other triggered PHR pending to allow the trigger PHR able to be sent to the network continuously. Such variation also belongs to the scope of the present invention.

From the above, for supporting the carrier aggregation, the UE shall perform the PHR for each of the configured uplink carriers. Thus, the process 50 provides the PHR triggering method, for allowing the PHR triggering of each configured uplink carrier being linked to each other. As a result, the network is able to obtain power usage status of each configured uplink carrier, and performs resource allocation and scheduling decision more efficiently.

Please note that, in order to have the description clearly, Applicant illustrates the invention by the process 40 and the process 50, separately. However, those skilled in the art can certainly combine the process 40 with the process 50 to meet practical requirements, which also belongs to the scope of the present invention.

In summary, the present invention provides a method and apparatus for performing Power Headroom Reporting to support carrier aggregation in a user equipment (UE) of a wireless communication system.

## Claims

1. A method for performing Power Headroom Reporting, named PHR hereinafter, in a user equipment, named UE hereinafter, of a wireless communication system (10), the wireless communication system (10) supporting Carrier Aggregation, named CA hereinafter, such that the UE is able to perform transmission through multiple carriers, the method comprising:
configuring a plurality of uplink carriers (410); and
**characterized by** generating at least one PH values, each corresponding to one of the plurality of uplink carriers (420),
wherein the at least one PH values are carried by PHR Control Elements and the PHR Control Elements each have an identification field for identifying which uplink carrier the carried PH value is corresponding to.

2. A communication device (100) for performing Power Headroom Reporting, named PHR hereinafter, in a user equipment, named UE hereinafter, of a wireless communication system (10), the wireless communication system (10) supporting Carrier Aggregation, named CA hereinafter, such that the UE is able to perform transmission through multiple carriers, the communication device (100) comprising:
a processor (108) for executing a program code (112); and
a storage device (110), coupled to the processor (108), for storing the program code (112), wherein the communication device is adapted to carry out the following steps when the program code is executed by the processor: configuring a plurality of uplink carriers (410); and
**characterized by** generating at least one PH values, each corresponding to one of the plurality of uplink carriers (420),
wherein the at least one PH values are carried by PHR Control Elements and the PHR Control Elements each have an identification field for identifying which uplink carrier the carried PH value is corresponding to.

3. The method or the communication device (100) of claims 1 and 2, **characterized in that** the at least one PH values are each carried by one PHR Control Element.

4. The method of claim 1 or 3 or the communication device (100) of claim 2 or 3, **characterized in that** the identification field is in a Medium Access Control, named MAC hereinafter, sub-header corresponding to the PHR Control Element.

5. The method of claim 1 or 3 or the communication device (100) of claim 2 or 3, **characterized in that** the identification field is in the PHR Control Element.

6. The method of claim 1 or the communication device (100) of claim 2, **characterized in that** the at least one PH values are all carried by a single PHR Control Element.

7. The method of claim 1 or 3 to 6 or the communication device (100) of any one of claims 2 to 6, **characterized in that** the PHR Control Elements each have an indication field, for indicating the number of the at least one PH values.

8. The method of any one of claims 1 and 3 to 7 or the communication device (100) of any one of claims 2 to 7, **characterized in that** the number of the at least one PH values is equal to the number of the plurality of uplink carriers, or is equal to the number of uplink carriers with activated PHR functionality in the plurality of uplink carriers.

9. The method of any one of claims 1 and 3 to 8 or the communication device (100) of any one of claims 2 to 8, **characterized in that** the at least one PH values are each transmitted by a corresponding uplink carrier of the plurality of uplink carriers, or are all transmitted by a pre-defined uplink carrier of the plurality of uplink carriers.

10. The method of any one of claims 1 and 3 to 9 or the communication device (100) of any one of claims 2 to 9, **characterized in that** the method or the program code (112) further comprises:
performing PHR for each of the plurality of uplink carriers (510); and
triggering the PHR corresponding to a second uplink carrier of the plurality of uplink carriers when the PHR corresponding to a first uplink carrier of the plurality of uplink carriers is triggered (520).

11. The method or the communication device (100) of claim 10, **characterized in that** the PHR corresponding to the first uplink carrier is triggered due to a path loss change of the first uplink carrier, or is triggered due to a periodic timer.

12. The method or the communication device (100) of claim 11, **characterized in that** a timer *"prohibitPHR- Timer"* of the second uplink carrier is not running.

13. The method of any one of claims 1 and 3 to 12 or the communication device (100) of any one of claims 2 to 12, **characterized in that** the UE has a plurality of timers, each corresponding to the plurality of uplink carriers, for controlling PHR triggering in the plurality of uplink carriers.

14. The method or the communication device (100) of claim 13, **characterized in that** the plurality of timers are each a periodic timer *"periodicPHR- Timer",* for periodically performing the PHR triggering in the plurality of uplink carriers, or are each a timer *"prohibitPHR- Timer",* for prohibiting the PHR triggering in the plurality of uplink carriers during operation.

15. The method or the communication device (100) of claim 13 or 14, **characterized in that** the number of the plurality of timers is equal to the number of the plurality of uplink carriers.

16. The method of any one of claims 1 and 3 to 15 or the communication device (100) of any one of claims 2 to 15, **characterized in that** the method or the program code (112) further comprises:
keeping all other triggered PHR pending when the PHR corresponding to a third uplink carrier of the plurality of uplink carriers is sent.

## Patentansprüche

1. Verfahren zum Durchführen einer Leistungsreservebenachrichtigung bzw. eines Power Headroom Reportings, im Folgenden PHR genannt, in einem Anwenderendgerät, im Folgenden UE genannt, eines Drahtloskommunikationssystems (10), wobei das Drahtloskommunikationssystem (10) Trägerbündelung, im Folgenden CA genannt, unterstützt, so dass das UE in der Lage ist, auf vielen Trägern Sendevorgänge durchzuführen, wobei das Verfahren umfasst:
Einrichten einer Vielzahl von Aufwärts- bzw. Uplinkträgern (410); und
**gekennzeichnet ist durch** Erzeugen zumindest eines PH-Wertes bzw. von PH-Werten, von welchen jeder zu einem der Vielzahl von Uplinkträgern (420) gehört,
wobei der mindestens eine PH-Wert **durch** PHR-Steuerelemente transportiert wird und jedes der PHR-Steuerelemente ein Kennfeld zum Kennzeichnen aufweist, zu welchem Uplinkträger der transportierte PH-Wert gehört.

2. Kommunikationsgerät (100) zum Durchführen einer Leistungsreservebenachrichtigung bzw. eines Power Headroom Reportings, im Folgenden PHR genannt, in einem Anwenderendgerät, im Folgenden UE genannt, eines Drahtloskommunikationssystems (10), wobei das Drahtloskommunikationssystem (10) Trägerbündelung, im Folgenden CA genannt, unterstützt, so dass das UE in der Lage ist, auf vielen Trägern Sendevorgänge durchzuführen, wobei das Kommunikationsgerät (100) umfasst:
einen Prozessor (108) zum Ausführen eines Programmcodes (112); und
ein Speichergerät (110), welches zum Speichern des Programmcodes (112) mit dem Prozessor (108) gekoppelt ist, wobei das Kommunikationsgerät (100) eingerichtet ist, die folgenden Schritte auszuführen, wenn der Programmcode (112) durch den Prozessor ausgeführt wird:
Einrichten einer Vielzahl von Aufwärts- bzw. Uplinkträgern (410); und
**gekennzeichnet ist durch** Erzeugen zumindest eines PH-Wertes bzw. von PH-Werten, von welchen jeder zu einem der Vielzahl von Uplinkträgern (420) gehört,
wobei der mindestens eine PH-Wert **durch** PHR-Steuerelemente transportiert wird und jedes der PHR-Steuerelemente ein Kennfeld zum Kennzeichnen aufweist, zu welchem Uplinkträger der transportierte PH-Wert gehört.

3. Verfahren oder Kommunikationsgerät (100) nach Anspruch 1 oder 2, **dadurch gekennzeichnet, dass** der mindestens eine PH-Wert bzw. die PH-Werte von einem jeweiligen PHR-Steuerelement transportiert wird.

4. Verfahren nach Anspruch 1 oder 3 oder Kommunikationsgerät (100) nach Anspruch 2 oder 3, **dadurch gekennzeichnet, dass** das Kennfeld in einem Mediumzugangssteuer-Unterheader bzw. Medium Access Control, im Folgenden MAC genannter, Sub-Header angeordnet ist, welches zu dem PHR-Steuerelement gehört.

5. Verfahren nach Anspruch 1 oder 3 oder Kommunikationsgerät (100) nach Anspruch 2 oder 3, **dadurch gekennzeichnet, dass** das Kennfeld in dem PHR-Steuerelement enthalten ist.

6. Verfahren nach Anspruch 1 oder Kommunikationsgerät (100) nach Anspruch 2, **dadurch gekennzeichnet, dass** der zumindest eine PH-Wert bzw. die PH-Werte alle durch ein einziges PHR-Steuerelement transportiert werden.

7. Verfahren nach einem der Ansprüche 1 oder 3 bis 6 oder Kommunikationsgerät (100) nach einem der Ansprüche 2 bis 6, **dadurch gekennzeichnet, dass** die PHR-Steuerelemente jeweils ein Anzeigefeld zum Anzeigen der Anzahl des mindestens einen PH-Wertes bzw. der PH-Werte haben.

8. Verfahren nach einem der Ansprüche 1 und 3 bis 7 oder Kommunikationsgerät (100) nach einem der Ansprüche 2 bis 7, **dadurch gekennzeichnet, dass** die Anzahl des mindestens einen PH-Wertes bzw. der PH-Werte gleich der Anzahl der Vielzahl von Uplinkträgern ist oder gleich der Anzahl der Uplinkträger mit aktivierter PHR-Funktionalität in der Vielzahl von Uplinkträgern ist.

9. Verfahren nach einem der Ansprüche 1 und 3 bis 8 oder Kommunikationsgerät (100) nach einem der Ansprüche 2 bis 8, **dadurch gekennzeichnet, dass** der mindestens eine PH-Wert bzw. die PH-Werte jeweils durch einen zugehörigen Uplinkträger der Vielzahl von Uplinkträgern gesendet werden oder alle durch einen vordefinierten Uplinkträger der Vielzahl von Uplinkträgern gesendet werden.

10. Verfahren nach einem der Ansprüche 1 und 3 bis 9 oder Kommunikationsgerät (100) nach einem der Ansprüche 2 bis 9, **dadurch gekennzeichnet, dass** das Verfahren oder der Programmcode (112) weiter umfasst:
Durchführen einer PHR für jeden der Vielzahl von Uplinkträgern (510); und
Auslösen der zu einem zweiten Uplinkträger der Vielzahl von Uplinkträgern zugehörigen PHR, wenn die zu einem ersten Uplinkträger der Vielzahl von Uplinkträgern zugehörige PHR ausgelöst wird (520).

11. Verfahren oder Kommunikationsgerät (100) nach Anspruch 10, **dadurch gekennzeichnet, dass** die zu dem ersten Uplinkträger gehörige PHR aufgrund einer Pfadverluständerung bzw. Path Lost Change des ersten Uplinkträgers ausgelöst wird oder aufgrund eines periodischen Timers ausgelöst wird.

12. Verfahren oder Kommunikationsgerät (100) nach Anspruch 11, **dadurch gekennzeichnet, dass** ein *"prohibitPHR-Timer"* des zweiten Uplinkträgers nicht läuft.

13. Verfahren nach einem der Ansprüche 1 und 3 bis 12 oder Kommunikationsgerät (100) nach einem der Ansprüche 2 bis 12, **dadurch gekennzeichnet, dass** das UE eine Vielzahl von Timern hat, von denen jeder zu der Vielzahl von Uplinkträgern gehört, um eine PHR-Auslösung in der Vielzahl von Uplinkträgern zu steuern.

14. Verfahren oder Kommunikationsgerät (100) nach Anspruch 13, **dadurch gekennzeichnet, dass** die Vielzahl von Timern jeweils ein periodischer Timer *"periodicPHR-Timer"* ist, um die PHR-Auslösung in der Vielzahl von Uplinkträgern periodisch durchzuführen, oder jeweils ein Timer *"prohibitPHR-Timer"* ist, um die PHR-Auslösung in der Vielzahl von Uplinkträgern während des Laufens zu verhindern.

15. Verfahren oder Kommunikationsgerät (100) nach Anspruch 13 oder 14, **dadurch gekennzeichnet, dass** die Anzahl der Vielzahl von Timern gleich der Anzahl der Vielzahl von Uplinkträgern ist.

16. Verfahren nach einem der Ansprüche 1 und 3 bis 15 oder Kommunikationsgerät (100) nach einem der Ansprüche 2 bis 15, **dadurch gekennzeichnet, dass** das Verfahren oder der Programmcode (112) weiter umfasst:
Aufbewahren aller anderer anhängiger ausgelöster PHR, wenn die zu einem dritten Uplinkträger der Vielzahl von Uplinkträgern gehörige PHR gesendet wird.

## Revendications

1. Procédé de mise en oeuvre de rapport de marge de puissance, appelé ci-après rapport PHR, dans un équipement d'utilisateur, appelé ci-après équipement UE, d'un système de communication sans fil (10), le système de communication sans fil (10) prenant en charge une agrégation de porteuses, appelée ci-après agrégation CA, de sorte que l'équipement UE est apte à mettre en oeuvre une transmission par le biais de multiples porteuses, le procédé comprenant :
la configuration d'une pluralité de porteuses de liaison montante (410) ; et
**caractérisé par** la génération d'au moins une valeur de marge PH, où chaque valeur correspond à l'une de la pluralité de porteuses de liaison montante (420) ;
dans lequel ladite au moins une valeur de marge PH est transportée par des éléments de commande de rapport PHR, et les éléments de commande de rapport PHR présentent chacun un champ d'identification destiné à identifier à quelle porteuse de liaison montante correspond la valeur de marge PH transportée.

2. Dispositif de communication (100) destiné à mettre en oeuvre un rapport de marge de puissance, appelé ci-après rapport PHR, dans un équipement d'utilisateur, appelé ci-après équipement UE, d'un système de communication sans fil (10), le système de communication sans fil (10) prenant en charge une agrégation de porteuses, appelée ci-après agrégation CA, de sorte que l'équipement UE est apte à mettre en oeuvre une transmission par le biais de multiples porteuses, le dispositif de communication (100) comprenant :
un processeur (108) destiné à exécuter un code de programme (112) ; et
un dispositif de stockage (110), couplé au processeur (108), pour stocker le code de programme (112), dans lequel le dispositif de communication est apte à mettre en oeuvre les étapes ci-dessous lorsque le code de programme est exécuté par le processeur :
la configuration d'une pluralité de porteuses de liaison montante (410) ; et
**caractérisé par** la génération d'au moins une valeur de marge PH, où chaque valeur correspond à l'une de la pluralité de porteuses de liaison montante (420) ;
dans lequel ladite au moins une valeur de marge PH est transportée par des éléments de commande de rapport PHR, et les éléments de commande de rapport PHR présentent chacun un champ d'identification destiné à identifier à quelle porteuse de liaison montante correspond la valeur de marge PH transportée.

3. Procédé ou dispositif de communication (100) selon les revendications 1 et 2, **caractérisé en ce que** les valeurs de ladite au moins une valeur de marge PH sont chacune transportées par un élément de commande de rapport PHR.

4. Procédé selon la revendication 1 ou 3, ou dispositif de communication (100) selon la revendication 2 ou 3, **caractérisé en ce que** le champ d'identification est inclus dans un sous-en-tête de commande d'accès au support, appelé ci-après MAC, correspondant à l'élément de commande de rapport PHR.

5. Procédé selon la revendication 1 ou 3, ou dispositif de communication (100) selon la revendication 2 ou 3, **caractérisé en ce que** le champ d'identification est inclus dans l'élément de commande de rapport PHR.

6. Procédé selon la revendication 1 ou dispositif de communication (100) selon la revendication 2, **caractérisé en ce que** les valeurs de ladite au moins une valeur de marge PH sont toutes transportées par un unique élément de commande de rapport PHR.

7. Procédé selon la revendication 1 ou les revendications 3 à 6, ou dispositif de communication (100) selon l'une quelconque des revendications 2 à 6, **caractérisé en ce que** les éléments de commande de rapport PHR présentent chacun un champ d'indication destiné à indiquer le nombre de valeurs de ladite au moins une valeur de marge PH.

8. Procédé selon l'une quelconque des revendications 1 et 3 à 7, ou dispositif de communication (100) selon l'une quelconque des revendications 2 à 7, **caractérisé en ce que** le nombre de valeurs de ladite au moins une valeur de marge PH est égal au nombre de la pluralité de porteuses de liaison montante, ou est égal au nombre de porteuses de liaison montante avec une fonctionnalité de rapport PHR activée dans la pluralité de porteuses de liaison montante.

9. Procédé selon l'une quelconque des revendications 1 et 3 à 8, ou dispositif de communication (100) selon l'une quelconque des revendications 2 à 8, **caractérisé en ce que** les valeurs de ladite au moins une valeur de marge PH sont chacune transmises par une porteuse de liaison montante correspondante de la pluralité de porteuses de liaison montante, ou sont toutes transmises par une porteuse de liaison montante prédéfinie de la pluralité de porteuses de liaison montante.

10. Procédé selon l'une quelconque des revendications 1 et 3 à 9, ou dispositif de communication (100) selon l'une quelconque des revendications 2 à 9, **caractérisé en ce que** le procédé ou le code de programme (112) comprend en outre :
la mise en oeuvre d'un rapport PHR pour chacune de la pluralité de porteuses de liaison montante (510) ; et
le déclenchement du rapport PHR correspondant à une deuxième porteuse de liaison montante de la pluralité de porteuses de liaison montante lorsque le rapport PHR correspondant à une première porteuse de liaison montante de la pluralité de porteuses de liaison montante est déclenché (520).

11. Procédé ou dispositif de communication (100) selon la revendication 10, **caractérisé en ce que** le rapport PHR correspondant à la première porteuse de liaison montante est déclenché sous l'effet d'une modification de perte de chemin de la première porteuse de liaison montante, ou est déclenché sous l'effet d'un temporisateur périodique.

12. Procédé ou dispositif de communication (100) selon la revendication 11, **caractérisé en ce qu'**un temporisateur *« prohibitPHR-Timer »* de la deuxième porteuse de liaison montante n'est pas en cours d'exécution.

13. Procédé selon l'une quelconque des revendications 1 et 3 à 12, ou dispositif de communication (100) selon l'une quelconque des revendications 2 à 12, **caractérisé en ce que** l'équipement UE présente une pluralité de temporisateurs, chacun correspondant à la pluralité de porteuses de liaison montante, en vue de commander le déclenchement de rapport PHR dans la pluralité de porteuses de liaison montante.

14. Procédé ou dispositif de communication (100) selon la revendication 13, **caractérisé en ce que** les temporisateurs de la pluralité de temporisateurs représentent chacun un temporisateur périodique *« periodicPHR-Timer* » destiné à mettre périodiquement en oeuvre le déclenchement de rapport PHR dans la pluralité de porteuses de liaison montante, ou représentent chacun un temporisateur *« prohibitPHR-Timer »* destiné à interdire le déclenchement de rapport PHR dans la pluralité de porteuses de liaison montante au cours du fonctionnement.

15. Procédé ou dispositif de communication (100) selon la revendication 13 ou 14, **caractérisé en ce que** le nombre de la pluralité de temporisateurs est égal au nombre de la pluralité de porteuses de liaison montante.

16. Procédé selon l'une quelconque des revendications 1 et 3 à 15, ou dispositif de communication (100) selon l'une quelconque des revendications 2 à 15, **caractérisé en ce que** le procédé ou le code de programme (112) comporte en outre :
le maintien en attente de tout autre rapport PHR déclenché lorsque le rapport PHR correspondant à une troisième porteuse de liaison montante de la pluralité de porteuses de liaison montante est envoyé.
